# FASCICULE DE BREVET EUROPEEN

(11) **EP 4 198 644 B1**
(45) Date de publication et mention de la délivrance du brevet: **07.01.2026**
(21) Numéro de dépôt: 22209494.8
(22) Date de dépôt: 24.11.2022
(51) Int. Cl.: B29C 45/00, G04B 19/10, G04D 3/00, B29C 45/14

(54) **PROCÉDÉ DE FABRICATION D'UN CADRAN**
VERFAHREN ZUR HERSTELLUNG EINES ZIFFERBLATTS
METHOD FOR MANUFACTURING DIAL

(30) Priorité: 20.12.2021 EP 21216095
(43) Date de publication de la demande: 21.06.2023
(73) Titulaire: Rubattel et Weyermann S.A., 2300 La Chaux-de-Fonds (CH)
(72) Inventeur: ENGGIST, Yann, 3232 Ins (CH); JEANRENAUD, Frédéric, 2300 La Chaux-de-Fonds (CH)
(74) Mandataire: ICB SA

(56) Documents cités:
- EP-B1- 1 035 453
- WO-A1-2019/185422
- GB-A- 2 027 636

## Description

### Domaine technique de l'invention

L'invention porte sur un procédé et un système de fabrication d'un cadran d'une montre pourvu d'au moins un motif compris sur une surface de ce cadran destinée à être agencée en regard d'un verre/glace de la montre.

### Arrière-plan technologique

Les procédés de fabrication de cadrans comprennent généralement des opérations d'usinage d'une surface visible de ce cadran avant la réalisation d'appliques. De telles appliques sont souvent réalisées à partir d'opération de décalque, voire de sérigraphie ou encore de matriçage de la surface inférieure du cadran. Des opérations d'étampage/d'usinage d'une plaque métallique puis de collage sur la surface visible de ce cadran peuvent également être mis en œuvre pour réaliser de telles appliques. Le document GB 2 027 636 A montre un procédé de fabrication d'un cadran ainsi qu'un système de fabrication d'un cadran, comportant des motifs rapportés par surmoulage sur une ébauche de cadran.

Toutefois les solutions proposées par ces procédés restent insatisfaisantes au regard des critères d'exigence de fabrication de cadrans que sont notamment : l'aspect esthétique, l'absence de défauts ou rayures susceptibles de résulter des opérations d'usinage et la robustesse.

Dans ce contexte, on comprend qu'il existe donc un besoin de développer des solutions alternatives ne présentant pas les inconvénients cités ci-dessus.

### Résumé de l'invention

Le but de la présente invention est de pallier en tout ou partie les inconvénients cités précédemment en proposant un procédé et un système permettant de fabriquer un cadran de montre qui soit de grande qualité avec une grande versatilité et durable dans le temps.

A cet effet, l'invention porte sur un procédé de fabrication d'un cadran d'une montre tel que défini par la revendication 1.

Dans d'autres modes de réalisation :
- l'étape de finalisation comprend une sous-étape d'application d'un revêtement sur tout ou partie de ladite ébauche surmoulée sur l'ébauche de cadran après la réalisation d'une sous-étape de désassemblage de la première pièce de la deuxième pièce du moule ;
- l'étape de finalisation comprend une sous-étape d'application d'un revêtement sur tout ou partie de ladite ébauche surmoulée sur l'ébauche de cadran après la réalisation de la sous-étape de retrait ;
- l'étape de conception comprend une sous-étape d'application d'au moins un revêtement sur une face supérieure de cette ébauche de cadran ;
- ladite étape d'agencement comprend une sous-étape d'assemblage réversible de la deuxième pièce avec la plaque de support comprenant l'ébauche de cadran ladite sous étape comprenant une phase de connexion d'une extrémité d'un circuit d'injection ménagé dans cette deuxième pièce avec l'orifice d'entrée de l'ouverture traversante de l'ébauche de cadran ;
- la sous-étape de surmoulage comprend une phase de régulation de la température dudit moule notamment durant une période s'étalant avant le début de la phase d'injection de matière injectable dans la cavité jusqu'à la fin de cette phase injection de matière voire après cette fin de cette phase d'injection ;
- la sous-étape de surmoulage comprend une phase de mise sous vide de ladite cavité avant la phase d'injection de la matière injectable dans cette cavité ;
- la sous-étape d'application comprend une phase de dépôt d'une matière décorative et/ou fonctionnelle sur une face externe visible de l'ébauche du motif surmoulée sur l'ébauche de cadran ;
- le procédé comprend une étape d'élaboration d'au moins une empreinte dans la première pièce à partir d"au moins une pièce originale relative audit au moins un motif devant être fabriqué.

L'invention concerne aussi un système de fabrication d'un cadran d'une montre comprenant au moins un motif sur une face visible du cadran mettant en œuvre ce procédé, le système comprenant :
- un dispositif de conception d'une plaque de support comprenant l'ébauche de cadran, et
- un moule formé par l'assemblage réversible d'une première pièce et d'une deuxième pièce configurée pour recevoir une plaque de support de l'ébauche de cadran, le moule comprenant au moins une cavité formée par l'association de la première pièce comportant au moins une empreinte avec la face visible de l'ébauche de cadran, chaque cavité participant à la réalisation d'une ébauche du motif à partir d'un surmoulage par injection de matière injectable sur ladite face visible.

### Brève description des figures

Les buts, avantages et caractéristiques de la présente invention ressortiront plus clairement de la description détaillée qui suit, faite en liaison avec les figures annexées listées ci-dessous :
- la figure 1 est une représentation d'un système de fabrication d'un cadran d'une montre pourvu d'au moins un motif, selon un mode de réalisation de l'invention ;
- la figure 2 est un logigramme relatif à un procédé de fabrication du cadran pourvu d'au moins un motif, selon le mode de réalisation de l'invention ;
- la figure 3 est une vue en coupe d'une partie d'un moule du système, selon le mode de réalisation de l'invention ;
- la figure 4 est une représentation d'une plaque de support comprenant l'ébauche de cadran, sur cette figure peut être vue une face visible de cette ébauche de cadran qui est pourvue de plusieurs ébauches de motifs, tels que des appliques, surmoulés sur cette face, selon le mode de réalisation de l'invention ;
- la figure 5 est une représentation de la plaque de support comprenant l'ébauche de cadran sur cette figure peut être vue une face cachée de cette ébauche de cadran et qui est reliée à une carotte formée essentiellement par une deuxième pièce du moule non représentée, selon le mode de réalisation de l'invention ;
- la figure 6 est une vue de profil de la plaque de support comprenant l'ébauche de cadran ainsi que d'une carotte formée dans le moule, selon le mode de réalisation de l'invention ;
- les figures 7 et 8 sont des vues en coupe de différentes variantes d'ébauches de motifs surmoulées sur l'ébauche de cadran, selon le mode de réalisation de l'invention, et
- la figure 9 représente une montre comprenant un cadran pourvu d'au moins un motif, selon un mode de réalisation de l'invention.

### Description détaillée de l'invention

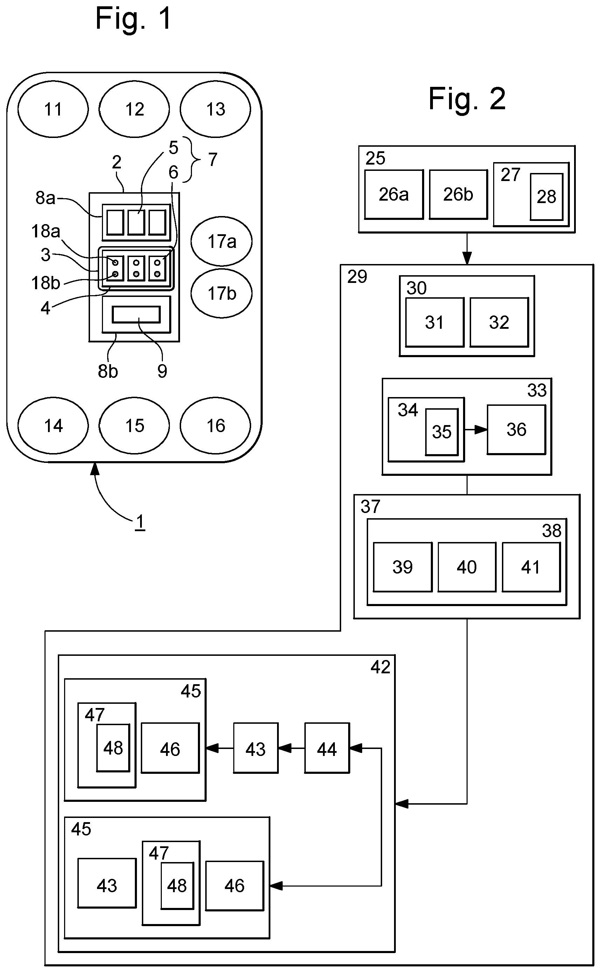

La figure 1 montre une représentation schématique d'un système 1 de fabrication d'un cadran 4 d'une montre 100 pourvu d'au moins un motif. Ce motif 10 représenté sur les figures 1, 3, 4 à 9, est réalisé sur une face visible 21a, aussi appelée face supérieure, de ce cadran 4 (ou l'ébauche de cadran utilisée pour la fabrication de ce cadran) c'est-à-dire sur une face 21a qui peut être vue par le porteur de la montre 100 lorsque ce cadran 4 est monté dans cette pièce 100. Cette face 21a du cadran 4 est dite « visible » en référence à la possibilité qu'elle a de pourvoir être perçue lorsqu'elle est montée dans la montre 100 et ce, contrairement à l'autre face 21b de ce cadran 4 qui est opposée à cette face visible 21a par exemple lorsque cet élément 4 est un cadran.

Un tel système 1 est apte à être mis en œuvre au sein d'une installation automatique d'assemblage (ou chaîne d'assemblage automatique) dédiée à la fabrication de tout ou partie d'une montre 100. En pareil contexte, ce système 1 participe à fabriquer et à assurer la distribution d'éléments d'habillage 4 comprenant au moins un motif 10 au sein de cette installation d'assemblage automatique.

La montre 100 est constituée d'éléments d'habillage 4 et de composants horlogers (non représentés) qui sont assemblés ensemble. Dans ce contexte, les éléments d'habillage 4 peuvent être des éléments visibles ou observables de la montre 100 lorsque cette dernière est notamment portée par l'utilisateur encore appelé porteur. S'agissant des composants horlogers, ils comprennent de manière non limitative non exhaustive des éléments constituant le mouvement horloger, les joints et/ou bagues compris dans cette montre 100. Dans ces conditions, on comprend donc que chaque cadran 4 fait partie des éléments de la montre 100 qui entourent le mouvement horloger et qui donne à la montre son aspect extérieur, son esthétique et son style. A titre d'exemple, ce cadran 4 peut être de manière non limitative et non exhaustive un cadran, un réhaut, une lunette, etc...

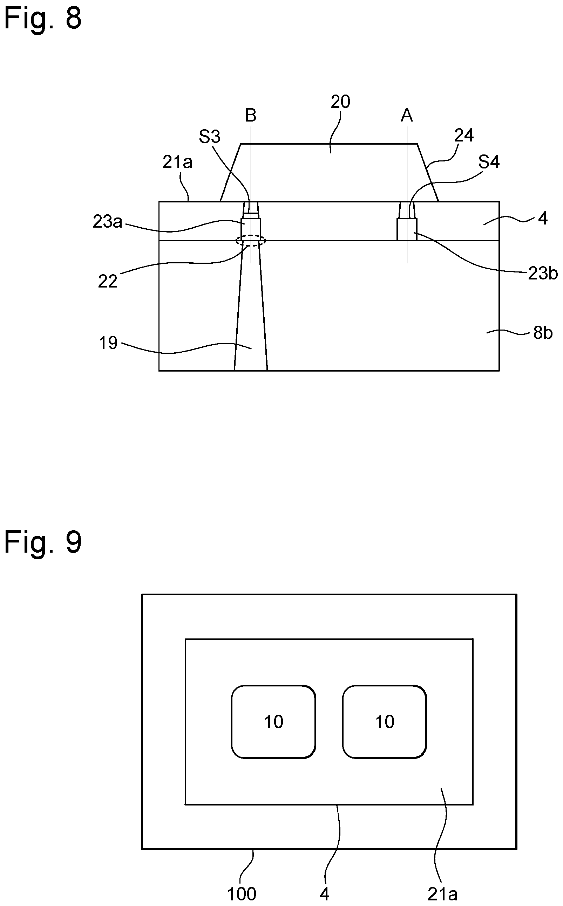

On notera que dans le mode de réalisation décrit et en référence à la figure 9, le cadran 4 est ici le cadran de la montre 100 et le motif 10 est une applique de ce cadran.

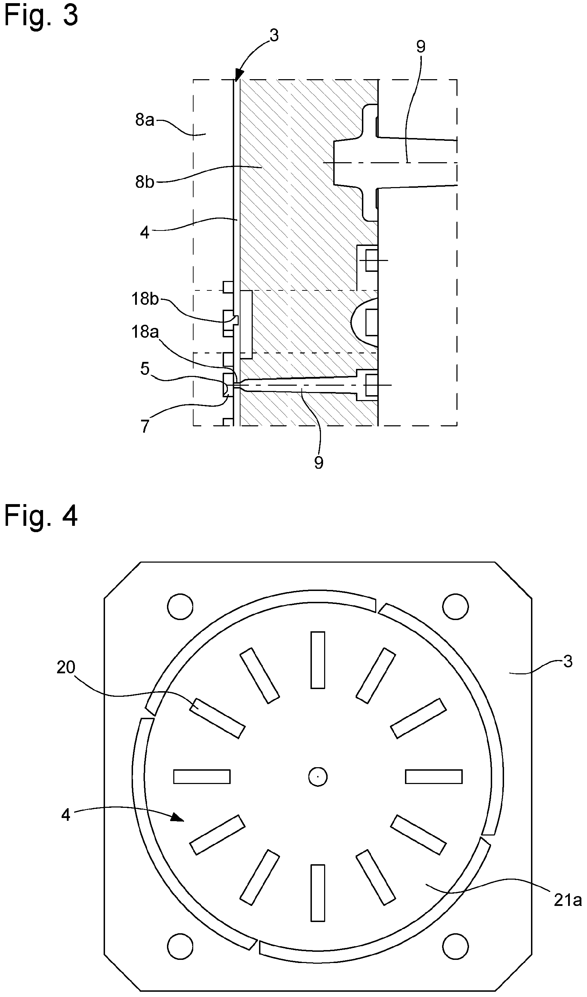

Ainsi que nous l'avons évoqué précédemment, ce cadran 4 comprend aussi une face dite cachée 21b, aussi appelée face inférieure, qui est une face opposée à la face visible 21a (visible sur les figures 4 à 8).

En référence aux figures 1 et 3, ce système 1 comprend de manière non exhaustive et non limitative :
- un moule 2 formé par l'assemblage réversible d'une première pièce 8a avec une deuxième pièce 8b susceptible de recevoir une plaque de support 3 comprenant au moins une ébauche de cadran 4.
- un dispositif d'injection 11 d'une matière injectable dans ce moule 2 ;
- un dispositif d'application 12 d'un revêtement sur une ébauche du motif 10 surmoulée sur l'ébauche de cadran 4. Le dispositif d'application d'un revêtement sur ladite ébauche surmoulée sur la face visible de l'ébauche de cadran participant à la finalisation de cette ébauche du motif ;
- un dispositif de conception 13 d'une pièce originale encore appelée « master » relative au motif 10 à fabriquer, mettant notamment en œuvre des techniques de lithographie en particulier de lithographie optique par projection ultraviolet, de lithographie optique par projection DUV (acronyme de « Deep Ultra-Violet »), de lithographie à immersion, de lithographie double exposition, de lithographie extrême ultra-violet et/ou de lithographie par nanoimpression ;
- un dispositif d'élaboration 14 dudit au moins un motif 10 à partir de la pièce originale mettant notamment en œuvre des techniques de réplication Ni shims ou BMG ;
- un dispositif de mise sous vide 15 dudit moule 2 et/ou un dispositif de régulation 16 de la température au sein de ce moule 2 ;
- un dispositif de retrait et d'agencement 17a de la plaque de support 3 d'au moins une ébauche de cadran 4 dans le moule 2, et
- un dispositif de conception 17b de la plaque de support.

Dans cette configuration, le dispositif de conception 17b de la plaque de support comprend:
- un module de réalisation de plusieurs trous traversant dans l'épaisseur du corps de la plaque de support, lesdits trous délimitant dans une telle plaque le bord de l'ébauche de cadran;
- un module de création d'au moins une ouverture traversante 18a et d'au moins une ouverture borgne 18b dans l'épaisseur de l'ébauche de cadran;
- un module d'application d'au moins un revêtement sur une face supérieure de cette ébauche de cadran.

Dans ce dispositif 17b, le module d'application est pourvu notamment d'un organe d'éjection de cette matière décorative et/ou fonctionnelle, et/ou d'un organe de pulvérisation d'une telle matière et/ou d'un organe de pulvérisation d'une pellicule/film comportant une telle matière. On notera que ce module est aussi apte à réaliser cette application par PVD ou laquage ou zaponnage.

Dans système 1, ce moule 2 comprend un logement formé par l'assemblage de la première pièce 8a avec la deuxième pièce 8b et dans lequel est susceptible d'être agencée la plaque de support 3 comprenant l'ébauche de cadran 4. On comprend que la plaque 3 peut comprendre une seule ébauche de cadran 4 ou dans une alternative plusieurs éléments d'habillage 4.

Dans ce moule 2, la deuxième pièce 8b comprend une face de réception configurée pour recevoir une telle plaque de support 3. Plus précisément, la plaque de support 3 est montée sur la face de réception de la deuxième pièce 8b de manière à ce que la face cachée 21b de l'ébauche de cadran 4 est agencée en regard voire au contact de tout ou partie de cette face de réception. Dans cette configuration, la face visible 21a de l'ébauche de cadran 4 est quant à elle en regard et en contact avec une face interne de la première pièce 8a. Autrement dit, la plaque de support 3, et donc l'ébauche de cadran 4, est agencée dans le logement de ce moule 2 en étant pris en sandwich entre les première et deuxième pièces 8a, 8b de ce moule 2.

La face interne de cette première pièce 8a du moule 2 peut comprendre une unique empreinte 5 ou encore de plusieurs empreintes 5 relatives chacune à un motif 10 à surmouler sur la face visible 21a de l'ébauche de cadran 4. Ces empreintes 5 présentent chacune une forme creuse définie dans cette face interne plane de la première pièce 8a.

La face visible 21a de l'ébauche de cadran 4 comprend une zone 6, aussi appelée zone de surmoulage 6, qui est définie pour former avec ladite empreinte 5 une cavité 7 dans laquelle une matière injectable est injectée et ce, de manière à participer à la conception de ladite ébauche 20 du motif 10. Cette cavité 7 définit la forme finale de ladite ébauche 20 et donc du motif 10 qui sont réalisés par la coopération de l'empreinte 5 et la zone 6 correspondante de la face visible 21a de l'ébauche de cadran 4. Dans cette configuration, cette zone 6 est donc agencée en regard de cette dite empreinte 5 lorsque la première pièce 8a et l'ébauche de cadran 4 sont assemblées l'une avec l'autre. On notera que le moule 2 comprend autant de cavités 7 que cette première pièce 8a comporte d'empreintes 5 et/ou que l'ébauche de cadran 4 comprend de zones de surmoulage 6.

Dans ce contexte, lorsque le système 1 est pourvu du dispositif de régulation 16 de la température au sein dudit moule 2, la première pièce 8a peut alors comprendre un circuit d'injection (non représenté) défini dans le corps de cette première pièce 8a qui est essentiellement agencé en dessous de chaque empreinte 5. Un tel circuit est raccordé au dispositif de régulation 16 de la température qui est alors apte à engendrer la circulation d'un fluide de refroidissement ou un fluide de chauffage dans ce circuit.

Dans l'ébauche de cadran 4 comprise dans la plaque de support 3, la face visible 21a et la face cachée 21b sont de préférence planes. Ces faces visible et cachée 21a, 21b sont aussi appelées respectivement les faces supérieure et inférieure de l'ébauche de cadran 4. Dans ce moule 2, la face visible 21a de ce cadran 4 est apte à être en contact avec la face interne de la première pièce 8a lorsque cette première pièce 8a est assemblée à la deuxième pièce 8b. Dans cette configuration, on comprend que l'ébauche de cadran 4 est agencé dans ce moule 2 en étant pris en sandwich entre ces première et deuxième pièces 8a, 8b.

En référence à la figure 3, ce cadran 4 comprend aussi au moins une ouverture traversante 18a, encore appelée canal traversant ou trou traversant, reliant la face cachée 21b de l'ébauche de cadran 4 à la face de réception de la deuxième pièce 8b, cette ouverture traversante 18a comprenant une première extrémité, appelée orifice de sortie, débouchant dans la cavité 7 du moule 2 et une deuxième extrémité débouchant sur la face cachée 21b de l'ébauche de cadran 4 appelée orifice d'entrée. On comprend que l'ébauche de cadran 4 comprend au moins autant d'ouvertures traversantes 18a que le moule 2 comprend de cavités 7.

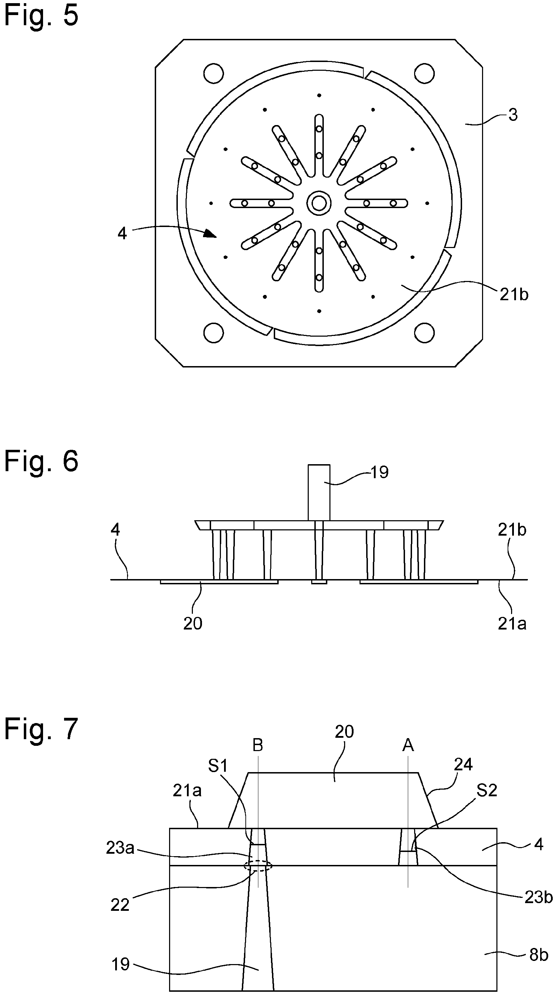

On notera en référence aux figures 7 et 8 que dans l'ébauche de cadran 4, l'ouverture traversante 18a en comprend de la matière injectable participant à former un pied 23a, du motif 10. Ce pied 23a est configuré notamment dans sa forme pour assurer un ancrage de ce motif 10 dans le corps de l'ébauche de cadran 4. D'ailleurs, la zone 6 qui est prévue pour former avec ladite empreinte 5 la cavité 7, peut comprendre en plus de cette ouverture traversante 18a, une ouverture borgne 18b, encore appelée trou borgne, comprenant un orifice d'entrée défini dans la face visible 21a de l'ébauche de cadran 4. Un telle ouverture borgne 18b en comprenant de la matière injectable participe à former un autre pied 23b du motif 10 qui est aussi configuré notamment dans sa forme pour assurer un ancrage de ce motif 10 dans le corps de l'ébauche de cadran 4.

Dans ce contexte, le corps de ces ouvertures traversante et borgne18a, 18b est formé d'un ensemble de sections S1, S2, S3, S4 transversales axiales qui sont perpendiculaires à un axe longitudinal A, B de ces ouvertures 18a, 18b. Dans cette configuration, l'ouverture traversante 18a s'étend selon l'axe longitudinal A reliant les centres des orifices d'entrée et de sortie entre eux. S'agissant de l'ouverture borgne 18b, elle s'étend également selon l'axe longitudinal B reliant les centres de l'orifice d'entrée de la matière injectable et du fond de cette ouverture 18b entre eux. Ces axes longitudinaux A, B sont sensiblement parallèles ou strictement parallèles entre eux. Dans cette configuration, on remarquera que :
- l'ouverture traversante 18a comprend au moins une section S1, S3 transversale axiale comprise entre l'orifice d'entrée et l'orifice de sortie, dont la surface est strictement différente ou sensiblement différente d'une surface d'une section transversale axiale comprenant l'orifice d'entrée et d'une surface d'une section transversale axiale comprenant l'orifice de sortie ;
- l'ouverture traversante 18a comprend au moins une section S1, S3 transversale axiale comprise entre l'orifice d'entrée et l'orifice de sortie, dont la surface est strictement différente ou sensiblement différente d'une surface d'une section transversale axiale comprenant l'orifice d'entrée ou d'une surface d'une section transversale axiale comprenant l'orifice de sortie ;
- l'ouverture traversante 18a comprend au moins une section S1, S3 transversale axiale comprise entre l'orifice d'entrée et l'orifice de sortie, dont la surface est
   - strictement supérieure ou sensiblement supérieure à une surface d'une section transversale axiale comprenant l'orifice de sortie, et/ou
   - strictement inférieure ou sensiblement inférieure à une surface d'une section transversale axiale comprenant l'orifice d'entrée ;
- l'ouverture borgne 18b comprend au moins une section S2, S4 transversale axiale comprise entre l'orifice d'entrée et le fond, dont la surface est strictement différente ou sensiblement différente d'une surface d'une section transversale axiale comprenant l'orifice d'entrée et d'une surface d'une section transversale axiale comprenant le fond ;
- l'ouverture borgne 18b comprend au moins une section S2, S4 transversale axiale comprise entre l'orifice d'entrée et le fond, dont la surface est strictement différente ou sensiblement différente d'une surface d'une section transversale axiale comprenant l'orifice d'entrée ou d'une surface d'une section transversale axiale comprenant le fond ;
- l'ouverture borgne 18b comprend au moins une section S2, S4 transversale axiale comprise entre l'orifice d'entrée et le fond, dont la surface est :
   - strictement supérieure ou sensiblement supérieure à une surface d'une section transversale axiale comprenant l'orifice de sortie, et/ou
   - strictement inférieure ou sensiblement inférieure à une surface d'une section transversale axiale comprenant l'orifice d'entrée.

Dans ce contexte et à titre d'exemple, sur la figure 7 l'ouverture traversante 18a et l'ouverture borgne 18b peuvent avoir une forme essentiellement tronconique ou encore une forme similaire à celle d'un tube dont le corps comprend deux parties présentant des sections transversales différentes ou encore des diamètres différents comme cela est représenté sur la figure 8.

Ainsi que nous l'avons évoqué, le moule 2 comprend au moins une cavité 7. Cette cavité 7 est formée par l'assemblage de l'empreinte 5 comprise dans la face interne de la première pièce 8a avec la zone 6 correspondante de la face visible 21a de l'ébauche de cadran 4. La zone 6 comprend l'ouverture traversante 18a ménagée dans l'ébauche de cadran 4 qui débouche via son orifice de sortie dans la cavité 7. Cette ouverture traversante 18a est connectée/reliée par l'intermédiaire de son orifice d'entrée au dispositif d'injection 11 de matière injectable et ce, via le circuit d'injection 9 défini dans la deuxième pièce 8b du moule 2. On notera que dans cette configuration, lorsque la cavité 7 comprend également une ouverture borgne 18b, l'orifice d'entrée de cette ouverture est alors défini dans la zone 6 de surmoulage de la face visible 21a de l'ébauche de cadran 4.

Dans cette configuration, la portion de matière injectable qui est solidifiée dans l'orifice d'entrée de l'ouverture traversante 18a forme un point d'injection 22 qui est défini pour être rompu notamment lors de la désolidarisation de l'ébauche de cadran 4 avec la deuxième pièce 8b comme cela est décrit par la suite. En effet, ce point d'injection 22 participe au maintien de la plaque de support 3, et donc de l'ébauche de cadran 4, sur la deuxième pièce 8b en la liant à une carotte 19 formée dans ce moule 2. Ce point d'injection 22 est situé de préférence au niveau de l'orifice d'entrée de l'ouverture traversante 18a. Autrement dit, ce point d'injection 22 est situé à l'extrémité ou au niveau de la base du pied 23a, formé dans l'ouverture traversante 18a, de ce motif 10.

On notera que cette carotte 19 qui est visible sur la figue 6, comprend une première partie formée par la solidification de la matière injectable dans l'ouverture traversante 18a et une deuxième partie formée par la solidification de la matière injectable dans le circuit d'injection 9 ménagé dans la deuxième pièce 8b.

En outre, dans cette configuration, on comprend bien que l'empreinte 5 vient former la partie visible du motif 10 tel qu'une applique, et la zone 6 correspondante de l'ébauche de cadran 4 participe quant à elle à la formation de la partie de liaison de cette applique avec l'ébauche de cadran à partir des pieds 23a, 23b de cette applique.

Ainsi que nous l'avons déjà évoqué, dans ce moule 2, la deuxième pièce 8b est prévue pour être assemblée de manière réversible avec une face de montage de la plaque de support 3 et/ou avec la face cachée 21b de l'ébauche de cadran 4. Cette deuxième pièce 8b comprend ledit au moins un circuit d'injection 9 de matière injectable relié en une première extrémité au dispositif d'injection 11 et en une deuxième extrémité à chaque ouverture traversante 18a de l'ébauche de cadran 4 de la plaque de support 3. On notera que lorsque le système 1 est pourvu du dispositif de mise sous vide 15 dudit moule 2, un circuit de vide peut être défini dans le corps de la deuxième pièce 8b qui est relié en une extrémité à une ouverture traversante 18a de l'ébauche de cadran 4 ainsi qu'en une autre extrémité à ce dispositif de mise sous vide 15, ledit dispositif 15 étant ainsi apte à provoquer un vide d'air dans chaque cavité 7 du moule 2. Dans cette configuration, on comprend que l'une des fonctions de la deuxième pièce 8b est d'assurer l'acheminement de la matière injectable vers l'ouverture traversante 18a d'injection de matière et de participer le cas échéant à mettre sous vide la cavité 7 du moule 2.

Dans ce système 1, le dispositif d'application 12 d'un revêtement sur une ébauche 20 du motif 10 surmoulé sur l'ébauche de cadran 4 est apte à appliquer/déposer un revêtement comprenant une matière décorative de type métallique et/ou une matière fonctionnelle sur une surface externe 24 de l'ébauche 20 de ce motif 10. Un tel dispositif 12 peut comprendre un module d'impression pourvu notamment d'un organe d'éjection de cette matière décorative et/ou fonctionnelle, et/ou d'un organe de pulvérisation d'une telle matière et/ou d'un organe de pulvérisation d'une pellicule/film comportant une telle matière. On notera que l'organe de pulvérisation peut être un organe de pulvérisation cathodique par courant continu ou encore un organe de pulvérisation magnétron pulsé à haute puissance plus connu sous l'acronyme HIPIMS pour « High Power Impulse Magnetron Sputtering ». On notera que d'autres techniques peuvent être mises en œuvre comme celles dites de « transfert à chaud » du revêtement sur l'ébauche 20.

Dans ce système 1, la matière décorative peut être formée d'une encre, ou encore d'un métal ou d'un alliage métallique. Cette matière décorative participe à modifier l'aspect esthétique du motif 10 en étant appliquée sur l'ébauche 20 de ce motif 10. S'agissant de la matière fonctionnelle, elle vise à conférer au motif 10 des caractéristiques fonctionnelles physiques et/ou chimiques liées par exemple à :
- la conductivité électrique, caractère semi-conducteur ou isolant ;
- la semi-conductivité ;
- l'électroluminescence ;
- la photoluminescence (par exemple une réaction à un rayonnement ultraviolet) ;
- la phosphorescence ;
- « X-chromisme » (photochrome, électrochrome, thermochrome, ionochrome, mécanochrome...) ;
- l'électroactivation ;
- le magnétisme ;
- etc.

Dans ce système 1, la matière injectable utilisée est par exemple une matière organique et/ou composite, ou une matière métallique ou céramique ou encore une matière thermodéformable, thermodurssissable, ou thermoplastique. A titre d'exemples cette matière peut comprendre les éléments suivants :
- plastique chargé type SLN (phosphorescent) et pigments de couleur et/ou fluorescent ;
- polymère chargé en céramique avec et sans pigment de couleur ;
- un additif permettant de donner un aspect métallique/brillant, type poudre en aluminium, poudre métallique ;
- additif permettant de rendre conducteur le polymère (pour des raisons techniques ou pour un post traitement chimique/galvanique ou autre) ;
- additif donnant un rendu esthétique recopiant un matériau (nacre, pierre...) ;
- additif donnant des caractéristiques mécaniques et/ou tribologiques particulières ;
- BMG plus connue sous l'acronyme « Bulk Metallic Glass » ;
- matière inoxydable ;
- matière métallique frittable ;
- céramique ;
- silicon, et/ou
- combinaison d'un ou l'autre de ces éléments entre eux ou plusieurs de ces derniers entre eux.

Dans cette configuration, on comprend bien qu'un tel système 1 peut permettre de fabriquer plusieurs motifs 10 surmoulés de manière simultanée sur la face visible 21a de l'ébauche de cadran 4. Pour ce faire, la première pièce 8a comprend alors plusieurs empreintes 5 et est apte à participer avec notamment l'ébauche de cadran 4 à l'obtention d'une série de motifs 10 surmoulés sur la face visible 21a de l'ébauche de cadran 4. En alternative, on comprend bien que la première pièce 8a peut comprendre une unique empreinte 5 relative à une ébauche du motif 10 surmoulée sur la face visible 21a de l'ébauche de cadran 4.

En référence à la figure 2, ce système 1 met en œuvre un procédé de fabrication du cadran 4 de montre 100 comprenant au moins un motif 10 sur une face visible 21a du cadran.

Un tel procédé comprend aussi une étape de conception 25 de la plaque de support 3 comprenant l'ébauche de cadran. Ladite étape 25 comprenant une sous-étape de réalisation 26a de plusieurs trous traversant dans l'épaisseur du corps de la plaque de support, lesdits trous délimitant dans une telle plaque le bord d'une ébauche de cadran. Dans cette configuration, l'ébauche de cadran est retenue au reste du corps de la plaque par des parties de cette plaque comprise chacune entre deux trous.

Cette étape 25 comprend ensuite une sous-étape de création 26b d'au moins une ouverture traversante 18a et au moins une ouverture borgne 18b dans l'épaisseur de l'ébauche de cadran. Ainsi que nous l'avons déjà évoqué, une telle ouverture 18a est prévue pour relier ensuite la face cachée 21b de l'ébauche de cadran 4 à la face de réception de la deuxième pièce 8b du moule.

Cette étape 25 comprend par la suite une sous-étape d'application 27 d'au moins un revêtement sur une face supérieure de cette ébauche de cadran. On notera que cette face supérieure correspond à la face visible de l'ébauche de cadran obtenu dans la plaque de support à l'issue de cette étape de conception 25. Lors de cette sous-étape 27, plusieurs couches peuvent être appliquées sur cette face visible.

A titre d'exemple, cette sous-étape 27 peut comprendre une phase de dépôt 28 d'au moins une couche de décor dans un matériau translucide ou transparent ou encore coloré. Cette dite au moins une couche de décor peut aussi comprendre une matière fonctionnelle visant à conférer au cadran *in fine* et en particulier à sa face visible des caractéristiques fonctionnelles physiques et/ou chimiques liées par exemple à :
- la conductivité électrique, caractère semi-conducteur ou isolant
- la semi-conductivité ;
- l'électroluminescence ;
- la photoluminescence (par exemple une réaction à un rayonnement ultraviolet) ;
- la phosphorescence ;
- « X-chromisme » (photochrome, électrochrome, thermochrome, ionochrome, mécanochrome...) ;
- l'électroactivation ;
- le magnétisme ;
- etc.

En complément, cette dite au moins une couche peut comprendre un vernis acrylique ou époxyde et/ou un matériau résistant à l'oxydation lorsque l'ébauche de cadran est en matériau métallique.

Ainsi que nous l'avons vu une telle étape de conception 25 permet ainsi d'obtenir la plaque de support comprenant l'ébauche de cadran et ce, à partir d'une plaque en matériau métallique, alliage métallique et/ou en polymère, dans laquelle plaque a été réalisé l'ébauche de cadran. Cette plaque de support est ensuite utilisée dans le cadre de la réalisation d'au moins un motif qui peut être bidimensionnel ou tridimensionnel, sur la face visible de l'ébauche de cadran 4.

Plus précisément, le procédé comprend par la suite une étape de réalisation 29 d'au moins un motif sur une face visible de l'ébauche de cadran 4 de la montre. Cette étape 29 comprend une étape d'élaboration 30 d'au moins une empreinte 5 dans la première pièce 8a à partir d"au moins une pièce originale relative audit au moins un motif 10 devant être fabriqué. On comprend que cette étape 30 est apte à participer à la réalisation d'autant d'empreintes 5 qu'il y a de motifs 10 à réaliser et ce, de manière à ce que de telles empreintes 5 soient surmoulées sur une même ébauche de cadran 4. Cette étape 30 prévoit la réalisation d'une empreinte 5 à partir d'une pièce originale autrement appelée « *master* ». Cette pièce originale a une forme similaire à celle du motif 10 devant être réalisé. On notera que la mise en œuvre de cette étape 30 peut requérir autant de pièces originales qu'il y a d'empreintes 5 à réaliser.

Dans ce contexte, l'étape d'élaboration 30 comprend une sous-étape de conception 31 de ladite pièce originale mise en œuvre à partir d'une technique de lithographie. Cette technique de lithographie est choisie parmi les techniques suivantes connues de l'état de la technique et qui ne sont pas décrites plus en détail ici : lithographie optique par projection ultraviolet, lithographie optique par projection DUV, lithographie à immersion, lithographie double exposition, lithographie extrême ultra-violet, lithographie par nanoimpression.

Cette étape d'élaboration 30 comprend ensuite une sous-étape de réplication 32 de la pièce originale visant à réaliser l'éléments d'habillage 5 par la reproduction d'une forme négative de la pièce originale. Cette sous-étape 32 prévoit en particulier la mise en œuvre de techniques de réplication du type Ni shims ou BMG (acronyme « Bulk Metallic Glass ») connues de l'état de la technique et qui ne sont pas décrites plus en détail ici.

Par la suite, le procédé comporte une étape d'agencement 33 dans le moule 2 de la plaque de support 3 comprenant l'ébauche de cadran 4 ledit moule 2 étant formé par l'assemblage réversible des première et deuxième pièces 8a, 8b. Lors de cette étape 33, la plaque de support 3 est positionnée dans le logement défini par l'assemblage réversible de ces première et deuxième pièces 8a, 8b. Une telle étape d'agencement 33 comprend une sous-étape d'assemblage 34 réversible de la deuxième pièce 8b avec la plaque de support 3 comprenant cette ébauche de cadran 4. Cette sous-étape 34 comprend une phase de connexion 35 d'une extrémité du circuit d'injection 9 ménagé dans cette deuxième pièce 8b avec l'orifice d'entrée de l'ouverture traversante 18a de l'ébauche de cadran 4. Une telle sous-étape 34 contribue à réaliser une connexion optimale entre l'extrémité du circuit d'injection 9 ménagé dans cette deuxième pièce 8b avec l'ouverture traversante 18a définie dans l'ébauche de cadran 4 et en particulier avec l'orifice d'entrée de cette ouverture 18a. On comprend que ce circuit 9 comporte autant d'extrémités que l'ébauche de cadran 4 comprend d'orifices d'entrée d'ouvertures traversantes 18a. On notera que l'orifice d'entrée est compris dans la face cachée 21b de l'ébauche de cadran 4. Une telle étape d'agencement 33 comprend aussi une sous-étape de formation 36 d'au moins une cavité 7 dans ce moule 2 par l'association de la première pièce 8a comportant au moins une empreinte 5 avec la face visible 21a de l'ébauche de cadran 4. On notera que chaque cavité 7 est définie pour l'élaboration/la formation de l'ébauche 20 du motif 10. Autrement dit, cette cavité 7 du moule 2 en étant formée par l'association d'au moins une empreinte 5 de la première pièce 8a du moule 2 avec la face visible 21a de l'élément habillage de ce moule 2, définit un espace correspondant au volume et à la forme de l'ébauche 20 du motif 10 qui est ici réalisé.

Le procédé comprend ensuite, une étape de construction 37 de ladite au moins une ébauche 20 relative au motif 10 sur la face visible 21a de l'ébauche de cadran 4. Cette étape 37 comprend une sous-étape de surmoulage 38 par injection de matière injectable dans la cavité 7 au travers d'une ouverture traversante 18a ménagée dans ladite ébauche de cadran 4 pourvue d'un orifice d'entrée de ladite cavité 7. Cette sous-étape 38 vise à réaliser un surmoulage de l'ébauche 20 du motif 10 sur la zone 6 correspondante de la face visible 21a de l'ébauche de cadran 4. Une telle sous-étape 38 comprend une phase d'injection 39 dans cette cavité 7 de la matière injectable provenant du dispositif d'injection 11 de cette matière. Dans ce contexte, la matière injectable provenant du dispositif d'injection 11 est introduite dans la cavité 7 en parcourant le circuit d'injection 9 de matière injectable défini dans la deuxième pièce 8b et l'ouverture traversante 18a comprise dans l'ébauche de cadran 4 reliant ce circuit d'injection 9 à ladite cavité 7. Ainsi, la matière injectable vient alors occuper tout le volume défini dans la cavité 7 en venant surmouler la zone 6 correspondante de la face visible 21a de l'ébauche de cadran 4 agencée en regard de l'empreinte 5 et ce, dans l'optique de former cette ébauche 20 du motif 10.

Une telle sous-étape de surmoulage 38 peut comprendre les phases suivantes :
- une phase de mise sous vide 40 de ladite cavité 7 avant la réalisation de la phase d'injection 39 de la matière injectable dans cette cavité 7, et/ou
- une phase de régulation 41 de la température de la cavité 7 notamment durant une période s'étalant avant le début de la phase d'injection 39 de matière injectable dans la cavité 7 jusqu'à la fin de cette phase injection 39 de matière voire après cette fin de cette phase infection 39.

De telles phases de mise sous vide 40 et de régulation 41 de la température visent à assurer une homogénéité structurelle de l'ébauche 20 du motif 10 lors de son surmoulage sur l'ébauche de cadran 4 afin de supprimer la présence de tout défaut susceptible d'être présent sur la face externe visible de cette ébauche 20. Un tel défaut peut par exemple résider en la présence d'une ligne de soudure sur la face externe visible de l'ébauche 20, formée suite à la jonction de deux flux d'écoulement de matière injectable dans la cavité 7. Une telle ligne de soudure est souvent présente sur des ébauches 20 de motifs 10 relatifs à des appliques présentant la forme d'un chiffre 6, 8 ou encore 0.

Lors de la mise en œuvre de la phase de mise sous vide 40, le fluide présent dans la cavité 7 par exemple un gaz comme l'air est alors évacué de la cavité 7 avant la réalisation de la phase d'injection 39.

Lors de la réalisation de la phase de régulation 41 de la température de la cavité 7, la température dans la cavité 7 est alors portée à une température qui est supérieure ou sensiblement supérieure à la température de la matière injectable provenant du dispositif d'injection 11 de cette matière et ce, avant la réalisation de la phase d'injection 39. Par la suite, une fois la phase d'injection 39 de la matière injectable réalisée c'est-à-dire achevée, la cavité 7, est aussitôt refroidie.

Le procédé comprend ensuite, une étape de finalisation 42 de ladite au moins une ébauche du motif 10. Cette étape 42 comprend une sous-étape d'application 43 d'un revêtement sur tout ou partie de ladite ébauche 20 de ce motif 10 surmoulée sur l'ébauche de cadran 4. Une telle sous-étape d'application 43 est mise en œuvre après la réalisation d'une des sous-étapes suivantes de cette étape de finalisation 42 :
▪ une sous-étape de désassemblage 44 de la première pièce 8a de la deuxième pièce 8b du moule 2, ou
▪ une sous-étape de retrait 45 dudit moule 2 de la plaque de support 3 comprenant l'ébauche de cadran 4 pourvu de ladite au moins une ébauche 20 du motif 10 surmoulée sur la face visible de cette ébauche de cadran 4.

En effet, à la suite de l'une ou l'autre de ces deux sous-étapes 44, 45, la sous-étape d'application 43 comprend une phase de dépôt 46 de la matière décorative et/ou fonctionnelle sur la face externe visible de chaque ébauche 20 du motif 10 surmoulée sur cette ébauche cadran 4. A titre d'exemple, cette phase de dépôt 46 peut prévoir l'application sur cette face externe de l'ébauche 20 d'une matière décorative comprenant une composition métallique. Une telle phase de dépôt 46 peut alors être réalisée selon une technologie mettant en œuvre une pulvérisation cathodique par courant continu ou encore une pulvérisation magnétron pulsé à haute puissance plus connu sous l'acronyme HIPIMS pour « *High Power Impulse Magnetron Sputtering ».*

On notera que lorsque sous-étape d'application 43 est réalisée à la suite de la sous-étape de désassemblage 44 de la première pièce 8a de la deuxième pièce 8b du moule 2, la phase de dépôt 46 est effectuée avec la plaque de support 3 qui est toujours montée/fixée sur la deuxième pièce 8b du moule 2. De plus, dans ce contexte, à la suite de cette phase de dépôt 46 le procédé prévoit la mise en œuvre de la sous-étape de retrait 45 de la plaque de support 3 du moule 2.

Dans ce procédé, la sous-étape de retrait 45 comprend une phase de rupture 47 du point d'injection 22 liant la plaque de support 3 et/ou l'ébauche de cadran 4, comprenant l'ébauche 20 du motif 10 ou le motif 10, à la deuxième pièce 8b. Cette phase 47 comprend une sous-phase d'application 48 d'une force sur la plaque de support 3 comprenant cette ébauche de cadran 4 visant à provoquer un déplacement en rotation ou en translation de cette plaque relativement à la deuxième pièce 8b et à provoquer ainsi la rupture du point d'injection 22. On notera qu'une fois le point d'injection 22 rompu, la base du pied du motif 10 formé dans l'ouverture traversante 18a est sensiblement à fleur de la face cachée 21b de l'ébauche de cadran 4 ou strictement à fleur de cette face cachée 21b.

Une fois la plaque de support 3 extraite de cette deuxième pièce 8b, l'ébauche de cadran 4 est alors dissocié de la plaque de support 3 afin d'être monté dans une montre ou encore d'être à son tour finalisé par l'application d'une couche de revêtement sur sa face visible 21a restante c'est-à-dire sur la portion de cette face 21a qui n'est pas occultée par le ou les motifs 10.

On notera en outre ainsi que nous l'avons évoqué précédemment que chaque cadran 4 peut comprendre plusieurs motifs 10 et dans ces conditions autant de point d'injection 22 qu'il y a de motifs 10.

Ainsi l'invention participe notamment à la réalisation d'au moins un motif 10 sur la face visible 21a d'éléments d'habillage 4 de pièces d'horlogerie.

## Revendications

1. Procédé de fabrication d'un cadran (4) d'une montre (100) comprenant au moins un motif (10) sur une face visible (21a) du cadran (4), ledit procédé comprenant :
- une étape de conception (25) d'une plaque de support (3) comprenant une ébauche de cadran (4), ladite étape (25) comprenant la réalisation (26a) de plusieurs trous traversant dans l'épaisseur du corps de la plaque de support, lesdits trous délimitant dans la plaque le bord de l'ébauche du cadran, l'étape de conception (25) comprenant une sous-étape de création (26b) d'au moins une ouverture traversante (18a) et d'au moins une ouverture borgne (18b) dans l'épaisseur de l'ébauche de cadran, et
- une étape de réalisation (29) d'au moins un motif sur une face visible de ladite ébauche de cadran lors de laquelle étape (29) est effectuée :
• un agencement (33) de cette plaque de support (3) dans un moule (2) formé par l'assemblage réversible d'une première et d'une deuxième pièces (8a, 8b), ladite étape d'agencement (33) comprenant une sous-étape de formation (36) d'au moins une cavité (7) dans ce moule (2) par l'association de la première pièce (8a) comportant au moins une empreinte (5) avec la face visible (21a) de l'ébauche du cadran (4) ;
• une construction (37) d'une ébauche (20) de chaque motif (10) sur la face visible (21a) de l'ébauche de cadran (4) ladite étape (37) comprenant une sous-étape de surmoulage (38) par injection de matière injectable dans la cavité (7) par l'intermédiaire de l'ouverture traversante (18a) ménagée dans ladite ébauche de cadran (4) pourvue d'un orifice d'entrée de ladite cavité (7) ;
• une finalisation (42) de l'ébauche (20) du motif (10) comprenant une sous-étape de retrait (45) dudit moule (2) de la plaque de support (3) comprenant l'ébauche de cadran (4) pourvue d'au moins une dite ébauche (20) d'un motif (10) surmoulé sur sa face, ladite sous-étape de retrait (45) comprenant une phase de rupture (47) d'un point d'injection (22) liant ladite ébauche de cadran (4) à la deuxième pièce (8b).

2. Procédé selon la revendication précédente, **caractérisé en ce que** l'étape de conception (25) comprend une sous-étape d'application (43) d'un revêtement sur tout ou partie de ladite ébauche (20) d'un motif surmoulé sur l'ébauche de cadran (4) après la réalisation d'une des sous-étapes suivantes de cette étape de finalisation (42) :
- une sous-étape de désassemblage (44) de la première pièce (8a) de la deuxième pièce (8b) du moule (2), ou
- la sous-étape de retrait (45).

3. Procédé selon l'une quelconque des revendications 1 et 2, **caractérisé en ce que** l'étape de conception (25) comprend une sous-étape d'application (27) d'au moins un revêtement sur une face supérieure de cette ébauche de cadran.

4. Procédé selon l'une quelconque des revendications précédentes, **caractérisé en ce que** ladite étape d'agencement (33) comprend une sous-étape d'assemblage (34) réversible de la deuxième pièce (8b) avec la plaque de support (3) comprenant l'ébauche de cadran (4) ladite sous étape (34) comprenant une phase de connexion (35) d'une extrémité d'un circuit d'injection (9) ménagé dans cette deuxième pièce (8b) avec l'orifice d'entrée de l'ouverture traversante (18) de l'ébauche de cadran (4).

5. Procédé selon l'une quelconque des revendications précédentes, **caractérisé en ce que** la sous-étape de surmoulage (38) comprend une phase de régulation (41) de la température dudit moule (2) notamment durant une période s'étalant avant le début de la phase d'injection (39) de matière injectable dans la cavité (7) jusqu'à la fin de cette phase injection (39) de matière voire après cette fin de cette phase d'injection (39).

6. Procédé selon l'une quelconque des revendications précédentes, **caractérisé en ce que** la sous-étape de surmoulage (38) comprend une phase de mise sous vide (40) de ladite cavité (7) avant la phase d'injection (39) de la matière injectable dans cette cavité (7).

7. Procédé selon la revendication 2 et l'une quelconque des revendications précédentes, **caractérisé en ce que** la sous-étape d'application (43) comprend une phase de dépôt (46) d'une matière décorative et/ou fonctionnelle sur une face externe visible de l'ébauche (20) du motif (10) surmoulée sur l'ébauche de cadran (4).

8. Procédé selon l'une quelconque des revendications précédentes **caractérisé en ce qu'**il comprend une étape d'élaboration (30) d'au moins une empreinte (5) dans la première pièce (8a) à partir d"au moins une pièce originale relative audit au moins un motif (10) devant être fabriqué.

9. Système (1) de fabrication d'un cadran (4) d'une montre (100) comprenant au moins un motif sur une face visible (21a) mettant en œuvre le procédé selon l'une quelconque des revendications 1 à 8, le système (1) comprenant :
- un dispositif de conception (17b) d'une plaque de support (3) comprenant une ébauche de cadran (4), le dispositif (17b) étant configuré pour réaliser plusieurs trous traversant dans l'épaisseur du corps de la plaque de support, lesdits trous délimitant dans la plaque le bord de l'ébauche du cadran, et
- un moule (2) formé par l'assemblage réversible d'une première pièce (8a) et d'une deuxième pièce (8b) configurée pour recevoir une plaque de support (3) de l'ébauche de cadran (4), le moule (2) comprenant au moins une cavité (7) formée par l'association de la première pièce (8a) comportant au moins une empreinte (5) avec la face visible (21a) de l'ébauche de cadran (4), chaque cavité (7) participant à la réalisation d'une ébauche (20) du motif (10) à partir d'un surmoulage par injection de matière injectable sur ladite face visible (21a).

## Patentansprüche

1. Verfahren für ein Herstellen eines Zifferblatts (4) für eine Uhr (100), das mindestens ein Muster (10) auf einer sichtbaren Fläche (21a) des Zifferblatts (4) aufweist, das Verfahren umfassend:
- einen Gestaltungsschritt (25), in dem eine Auflageplatte (3) gestaltet wird, die ein Zifferblatt-Rohwerk (4) umfasst, wobei der Schritt (25) ein Herstellen (26a) mehrerer Durchgangslöcher in der Dicke des Körpers der Auflageplatte umfasst, wobei diese Löcher in der Platte den Rand des Ziffernblatt-Rohwerks begrenzen, wobei der Gestaltungsschritt (25) einen Gestaltungsunterschritt (26b) umfasst, in dem mindestens eine Durchgangsöffnung (18a) und mindestens eine Sacköffnung (18b) in der Dicke des Zifferblatt-Rohwerks erzeugt werden, und
- einen Herstellungsschritt (29), in dem das mindestens eine Muster auf einer sichtbaren Fläche des Zifferblatt-Rohwerks hergestellt wird, wobei in diesem Schritt (29) Folgendes durchgeführt wird:
• Anordnen (33) dieser Auflageplatte (3) in einer Form (2), die durch umkehrbares Anordnen eines ersten Teils und eines zweiten Teils (8a, 8b) gebildet wird, wobei der Anordnungsschritt (33) einen Bildungsunterschritt (36) umfasst, in dem mindestens ein Hohlraum (7) in dieser Form durch Kombinieren des ersten Teils (8a), das den mindestens einen Abdruck (5) aufweist, mit der sichtbaren Fläche (21a) des Zifferblatt-Rohwerks (4) gebildet wird;
• Gestalten (37) eines Rohwerks (20) jedes Musters (10) auf der sichtbaren Fläche (21a) des Zifferblatt-Rohwerks (4), wobei der Schritt (37) einen Überformungs-Unterschritt (38) umfasst, bei dem ein spritzbares Material in den Hohlraum (7) über die Durchgangsöffnung (18a), die in dem Zifferblatt-Rohwerk (4) angeordnet und mit einer Eintrittsöffnung in den Hohlraum (7) versehen ist, eingespritzt wird;
• Fertigstellen (42) des Rohwerks (20) des Musters (10), umfassend einen Entfernungsunterschritt (45), in dem die Form (2) von der Auflageplatte (3), die das Zifferblatt-Rohwerk (4) aufweist, das mit dem mindestens einem Rohwerk (20) eines auf die Zifferblattfläche überformten Musters (10) vorgesehen ist, entfernt wird, wobei der Entfernungsunterschritt (45) eine Abtrennphase (47) umfasst, in der eine Einspritzstelle (22), die das Zifferblatt-Rohwerk (4) mit dem zweiten Teil (8b) verbindet, abgetrennt wird.

2. Verfahren nach dem vorhergehenden Anspruch, **dadurch gekennzeichnet, dass** der Gestaltungsschritt (25) einen Aufbringungsunterschritt (43) umfasst, in dem eine Beschichtung auf das gesamte oder einen Teil des Rohwerks (20) eines auf dem Zifferblatt-Rohwerk (4) überformten Musters aufgebracht wird, nachdem einer der folgenden Unterschritte in diesem Fertigstellungsschritt (42) durchgeführt wurde:
- ein Demontage-Unterschritt (44), in dem das erste Teil (8a) von dem zweiten Teil (8b) der Form (2) demontiert wird, oder
- der Entfernungsunterschritt (45).

3. Verfahren nach einem der Ansprüche 1 und 2, **dadurch gekennzeichnet, dass** der Gestaltungsschritt (25) einen Aufbringungsunterschritt (27) umfasst, in dem mindestens eine Beschichtung auf eine Oberseite des Zifferblatt-Rohwerks aufgebracht wird.

4. Verfahren nach einem der vorhergehenden Ansprüche, **dadurch gekennzeichnet, dass** der Anordnungsschritt (33) einen umkehrbaren Anordnungsunterschritt (34) umfasst, in dem das zweite Teil (8b) umkehrbar an der Auflageplatte (3) angeordnet wird, die das Zifferblatt-Rohwerk (4) aufweist, wobei der Unterschritt (34) eine Verbindungsphase (35) umfasst, in der ein Ende eines in diesem zweiten Teil (8b) angeordneten Einspritzkreislaufs (9) mit der Eintrittsöffnung der Durchgangsöffnung (18) in dem Zifferblatt-Rohwerk (4) verbunden wird.

5. Verfahren nach einem der vorhergehenden Ansprüche, **dadurch gekennzeichnet, dass** der Überformungs-Unterschritt (38) eine Temperaturregelungsphase (41) umfasst, in der die Temperatur der Form (2) geregelt wird, insbesondere über einen Zeitraum von vor Beginn der Materialeinspritzphase (39), in der einspritzbares Material in den Hohlraum (7) eingespritzt wird, bis zu dem Ende dieser Materialeinspritzphase (39) oder sogar nach dem Ende dieser Einspritzphase (39).

6. Verfahren nach einem der vorhergehenden Ansprüche, **dadurch gekennzeichnet, dass** der Überformungs-Unterschritt (38) eine Vakuumphase (40) umfasst, in der der Hohlraum (7) vor der Materialeinspritzphase (39), in der einspritzbares Material in den Hohlraum (7) eingespritzt wird, unter Vakuum gesetzt wird.

7. Verfahren nach Anspruch 2 und einem der vorhergehenden Ansprüche, **dadurch gekennzeichnet, dass** der Aufbringungsunterschritt (43) eine Abscheidungsphase (46) umfasst, in der ein dekoratives und/oder funktionales Material auf eine sichtbare Außenfläche des Rohwerks (20) des auf dem Zifferblatt-Rohwerk (4) überformten Musters (10) abgeschieden wird.

8. Verfahren nach einem der vorhergehenden Ansprüche, **dadurch gekennzeichnet, dass** es einen Vorbereitungsschritt (30) umfasst, in dem mindestens ein Abdruck (5) in dem ersten Teil (8a) unter Verwendung mindestens eines Originalteils in Bezug auf das mindestens eine herzustellende Muster (10) vorbereitet wird.

9. System (1) für ein Herstellen eines Zifferblatts (4) einer Uhr (100), das mindestens ein Muster auf einer sichtbaren Fläche (21a) aufweist, unter Verwendung des Verfahrens nach einem der Ansprüche 1 bis 8, das System (1) aufweisend:
- eine Vorrichtung (17b) für ein Gestalten einer Auflageplatte (3) umfassend ein Zifferblatt-Rohwerk (4), wobei die Vorrichtung (17b) eingerichtet ist, eine Mehrzahl von Durchgangslöchern in der Dicke des Körpers der Auflageplatte zu erzeugen, wobei die Löcher in der Platte den Rand des Zifferblatt-Rohwerks begrenzen, und
- eine Form (2), die durch umkehrbares Anordnen eines ersten Teils (8a) und eines zweiten Teils (8b) gebildet wird, die dazu eingerichtet sind, eine Auflageplatte (3) für das Zifferblatt-Rohwerk (4) zu halten, wobei die Form (2) mindestens einen Hohlraum (7) aufweist, der durch Kombinieren des ersten Teils (8a), das den mindestens einen Abdruck (5) aufweist, mit der sichtbaren Fläche (21a) des Zifferblatt-Rohwerks (4) gebildet wird, wobei jeder Hohlraum (7) zu der Herstellung eines Rohwerks (20) des Musters (10) aus einer Überformung beiträgt, die durch Einspritzen von einspritzbarem Material auf die sichtbare Fläche (21a) durchgeführt wird.

## Claims

1. A method for manufacturing a watch (100) dial (4) comprising at least one pattern (10) on a visible face (21a) of the dial (4), said method comprising:
- a design step (25) in which a support plate (3) is designed comprising a dial ebauche (4), said step (25) comprising the production (26a) of several through holes in the thickness of the body of the support plate, said holes delimiting in the plate the rim of the dial ebauche, the design step (25) comprising a creation sub-step (26b) in which at least one through opening (18a) and at least one blind opening (18b) are created in the thickness of the dial ebauche, and
- a production step (29) in which at least one pattern is produced on a visible face of said dial ebauche, in which step (29) the following is performed:
• arranging (33) this support plate (3) in a mould (2) formed by the reversible assembly of a first part and of a second part (8a, 8b), said arrangement step (33) comprising a formation sub-step (36) in which at least one cavity (7) is formed in this mould by combining the first part (8a) comprising at least one impression (5) with the visible face (21a) of the dial ebauche (4);
• designing (37) an ebauche (20) of each pattern (10) on the visible face (21a) of the dial ebauche (4), said step (37) comprising an over-moulding sub-step (38) in which an injectable material is injected into the cavity (7) via the through opening (18a) arranged in said dial ebauche (4) provided with an entry orifice to said cavity (7);
• finalising (42) the ebauche (20) of the pattern (10) comprising a removal sub-step (45) in which said mould (2) is removed from the support plate (3) comprising the dial ebauche (4) provided with at least one said ebauche (20) of a pattern (10) over-moulded on the dial face, said removal sub-step (45) comprising a breakaway phase (47) in which an injection point (22) connecting said dial ebauche (4) to the second part (8b) is broken.

2. The method according to the preceding claim, **characterised in that** the design step (25) comprises an application sub-step (43) in which a plating is applied to all or part of said ebauche (20) of a pattern over-moulded on the dial ebauche (4) after carrying out one of the following sub-steps in this finalisation step (42):
- a disassembly sub-step (44) in which the first part (8a) is disassembled from the second part (8b) of the mould (2), or
- the removal sub-step (45).

3. The method according to any of claims 1 and 2, **characterised in that** the design step (25) comprises an application sub-step (27) in which at least one plating is applied to an upper face of this dial ebauche

4. The method according to any of the preceding claims, **characterised in that** said arrangement step (33) comprises a reversible assembly sub-step (34) in which the second part (8b) is reversibly assembled to the support plate (3) comprising the dial ebauche (4), said sub-step (34) comprising a connection phase (35) in which of one end of an injection circuit (9) arranged in this second part (8b) is connected to the entry orifice of the through opening (18) in the dial ebauche (4).

5. The method according to any of the preceding claims, **characterised in that** the over-moulding sub-step (38) comprises a temperature control phase (41) in which the temperature of said mould (2) is controlled, particularly over a period from before the start of the material injection phase (39) in which injectable material is injected into the cavity (7), to the end of this material injection phase (39) or even after this end of this injection phase (39).

6. The method according to any of the preceding claims, **characterised in that** the over-moulding sub-step (38) comprises a vacuum phase (40) in which said cavity (7) is set to vacuum before the material injection phase (39) in which injectable material is injected into the cavity (7).

7. The method according to claim 2 and any of the preceding claims, **characterised in that** the application sub-step (43) comprises a deposition phase (46) in which a decorative and/or functional material is deposited on a visible outer face of the ebauche (20) of the pattern (10) over-moulded on the dial ebauche (4).

8. The method according to any of the preceding claims, **characterised in that** it comprises a preparation step (30) in which at least one impression (5) is prepared in the first part (8a) using at least one original part relative to said at least one pattern (10) to be manufactured.

9. A system (1) for manufacturing a watch (100) dial (4) comprising at least one pattern on a visible face (21a) using the method according to any of claims 1 to 8, the system (1) comprising:
- a device (17b) for designing a support plate (3) comprising a dial ebauche(4), the device (17b) being configured to create a plurality of through holes in the thickness of the body of the support plate, said holes delimiting in the plate the rim of the dial ebauche, and
- a mould (2) formed by the reversible assembly of a first part (8a) and a second part (8b) configured to hold a support plate (3) for the dial ebauche (4), the mould (2) comprising at least one cavity (7) formed by combining the first part (8a) comprising at least one impression (5) with the visible face (21a) of the dial ebauche (4), each cavity (7) contributing to the production of an ebauche (20) of the pattern (10) from an over-moulding carried out by injecting injectable material onto said visible face (21a).
